# EUROPÄISCHE PATENTSCHRIFT

(11) **EP 2 132 495 B1**
(45) Veröffentlichungstag und Bekanntmachung des Hinweises auf die Patenterteilung: **29.12.2010**
(21) Anmeldenummer: 08734344.8
(22) Anmeldetag: 26.02.2008
(51) Int. Cl.: F24J 2/52, H01L 31/042

(54) **BEFESTIGUNGSEINRICHTUNG FÜR SOLARMODULE**
FIXTURE DEVICE FOR SOLAR MODULES
DISPOSITIF DE FIXATION POUR MODULES SOLAIRES

(30) Priorität: 30.03.2007 DE 102007016047; 30.03.2007 DE 202007004894 U
(43) Veröffentlichungstag der Anmeldung: 16.12.2009
(73) Patentinhaber: Haticon GmbH, 16303 Schwedt (DE)
(72) Erfinder: BARTELT-MUSZYNSKI, Sven, 16303 Schwedt (DE)
(74) Vertreter: Kietzmann, Manfred
(86) Internationale Anmeldenummer: PCT/DE2008/000370
(87) Internationale Veröffentlichungsnummer: WO 2008/119316

(56) Entgegenhaltungen:
- EP-A- 1 767 719
- WO-A-03/098126
- DE-B3-102005 001 654
- DE-U1-202004 015 811
- DE-U1-202005 001 469
- DE-U1-202006 009 871
- DE-U1-202006 013 261

## Beschreibung

Die Erfindung betrifft eine Befestigungseinrichtung für die außen liegenden Rahmen von Solarmodulen, insbesondere in Abschnit-Endbereichabschnitten.

Bei der Befestigung von Solarmodulrahmen nebeneinanderliegender Solarmodule auf einem Montageprofil werden Klemmstücke oder Klemmscheiben genutzt, die mittig mit einem Verbindungselement mit dem Montageprofil verbunden werden und die Rahmen gleichzeitig von oben auf das Montageprofil pressen (u.a. DE 102005001654 B3, DE 20 2006 009 871 U1). Am äußeren Rand von mehreren nebeneinander angeordneten Solarmodulen versagt diese Technik, da nur noch ein Solarmodulrahmen als Auflage für das Klemmstück vorhanden ist. Deshalb werden zusätzlich anstelle des fehlenden Rahmens Distanzhalter oder ähnliche Mittel angeordnet, um für das Klemmstück eine symmetrische Auflage zu erreichen. Da dies nicht nur aufwendig, sondern auch optisch nicht anspruchsvoll ist, erfolgt eine zusätzliche Verblendung z.B. mittels Einschubwinkeln (WO 03/098126A1).

Aus der DE 20 2006 013 261.9 ist ferner eine Befestigung für außenliegende Rahmenabschnitte von Solarmodulen im Endbereich von Tragprofilen bekannt. Der Endbereich der Tragprofile weist hier einen Querschnitt mit einem offenen Bereich auf, in den ein Spreizeinsatz einsetzbar ist, der mit einem Schenkel eines L-förmigen Endstückes tragprofilstirnseitig verbindbar ist, wobei beim Herstellen der Verbindung Endstück-Spreizeinsatz im Tragprofil infolge des Aufspreizens des Spreizeinsatzes eine Klemmwirkung erzielt wird. Der andere L-Schenkel greift oben über den Solarmodulrahmen und bewirkt beim Herstellen der Verbindung Endstück-Spreizeinsatz ein Anpressen des Rahmens des Solarmoduls auf das Tragprofil.

Es hat sich nun gezeigt, dass diese Befestigung eine hohe Maßgenauigkeit der Modulrahmen und des Gestelles erforderlich macht, die schwer einzuhalten ist.

Die EP 1 767 719 A2 beschreibt eine Befestigungseinrichtung für Solarpanele an einer C-förmigen Montageschiene. Die Befestigungseinrichtung besteht aus einem Z-förmigen Niederhalteelement für das Solarpanel und einem Hintergreifteil, mit Eingriff in die Montageschiene, wobei das Niederhalteelement und das Hintergreifteil durch einen Gewindebolzen miteinander verbunden und durch Drehung des Bolzens zum Verspannen aufeinander zu bewegbar sind. Beim Verspannen verändert sich die Lage des Hintergreifteils, so dass das Niederhalteelement sich vollständig und unter Wirkung eines Biegmomentes an das Solarpanel anlegt.

Ausgehend von diesem Stand der Technik ist es Aufgabe der Erfindung, eine Endbefestigung zu ermöglichen, die montagefreundlich und optisch anspruchsvoll ist sowie toleranzausgleichend einsetzbar ist, bei gleichzeitiger Sicherung der notwendigen Befestigungskräfte.

Gelöst wird diese Aufgabe mit den Merkmalen des Anspruches 1, vorteilhafte Ausgestaltungen sind Gegenstand der Unteransprüche.

Durch die Verschiebbarkeit in Tragprofillängsrichtung lassen sich Montage- und Traggerüsttoleranzen sowie Abweichungen in den Maßen der Solarmodule unter Beibehaltung der Stabilität der Befestigung montagefreundlich ausgleichen.

Eine vorteilhafte Ausführung der Befestigung sieht vor, dass die Führungspaarung des Klemmteilträgers mit dem Tragprofil aus Längsstegen des Tragprofils und Nasen oder Nasenstegen an Seitenschenkeln des Klemmteilträgers besteht sowie eine Auflage des Klemmteilträgers auf dem Tragprofil vorhanden ist. Die Längsstege werden dabei bevorzugt außen am Tragprofil und die Nasen oder Nasenstege innen an den seitenschenkeln vorgesehen. Sowohl die Längsstege als auch die Nasen oder Nasenstege sollten dabei parallel zur Trag-profillängsrichtung im montierten Zustand verlaufen.

Eine weitere vorteilhafte Ausgestaltung der Befestigung sieht vor, dass die zur Stirnfläche des Rahmens des Solarmoduls weisende Seitenebene des Klemmteilträgers einen Winkel α gegenüber der Stirnfläche des Rahmens einnimmt. Dies ist erreichbar, wenn der Klemmteilträger in der Seitenansicht einen rhomboiden Querschnitt aufweist. Verschiebungen des Klemmteils in der Querschnittsebene des Klemmteilträgers beim Verspannen führen dann dazu, dass eine optimale Auf- bzw. Anlage des Klemmteils am Rahmen des Solarmoduls erzielt werden kann.

Ein solches Klemmteil ist als Doppelwinkelprofil mit in entgegengesetzte Richtung weisenden Schenkeln (Z-Profil) ausgebildet, wobei der oben liegende Schenkel über den Rahmenabschnitt des Solarmoduls greift und der untere Schenkel geführt höhenverstellbar in Verschieberichtung senkrecht zur Tragprofillängsrichtung im oder am Klemmteilträger angeordnet ist.
In Ausgestaltung eines solchen Klemmteiles ist erfindungsgemäß vorgesehen, dass zur Höhenverstellung des Klemmteils in Verschieberichtung entweder ein Gewindebolzen in einem Innengewinde des Schenkels verdrehbar angeordnet ist und sich am Kopfteil des Klemmteilträgers abstützt, oder ein Gewindebolzen in einem Innengewinde des Kopfteils verdrehbar angeordnet ist und sich am Schenkel abstützt.

Um den Gewindebolzen verdrehen zu können, weist bevorzugt das Kopfteil eine Bohrung auf, über die der Gewindebolzen dann zugängig ist.

In einer weiteren Ausgestaltung ist vorgesehen, dass zur Abstützung des Gewindebolzens das Kopfteil innenseitig als gekröpfte Hohlschiene zur Aufnahme des Kopfes des Gewindebolzens ausgebildet ist.

Als Innengewinde des Schenkels oder des Kopfteiles kann eine in einem Hohlraum oder einer Nut des Schenkels oder des Kopfteils angeordnete Mutter dienen.

In einer weiteren Ausgestaltung der Befestigung ist vorgesehen, dass der Klemmteilträger mit eingesetztem Klemmteil im Bereich der Seitenschenkel des Klemmteilträgers und des Steges des Klemmteils durch eine Muffe umhüllt ist.
Diese weist innen und vorzugsweise auch außen die Form eines schiefen Hohlquaders auf, wobei die Schiefwinkligkeit der Muffe dem Winkel α entspricht. Dabei ist der Winkel α so bemessen, dass ein Verschieben des Klemmteils innerhalb des Klemmteilträgers beim Verspannen zu einer optimalen Endstellung des Steges nämlich parallel oder nahezu parallel zur Stirnfläche des Rahmen führt. In der verspannten Endstellung liegt der Steg im Bereich gegenüber dem unteren Z-Schenkel dann innen an der Muffe an. Alle Teile sind so miteinander verspannt.

Ein Ausführungsbeispiel der Einzelteile der Befestigung ist in den Zeichnungen dargestellt. Es zeigen:
- Fig.1: Klemmteil mit Rahmenabschnitt des Solarmoduls,
- Fig.2: Klemmteilträger in zwei Schnitten,
- Fig.3: Muffe und
- Fig.4: Tragprofil.

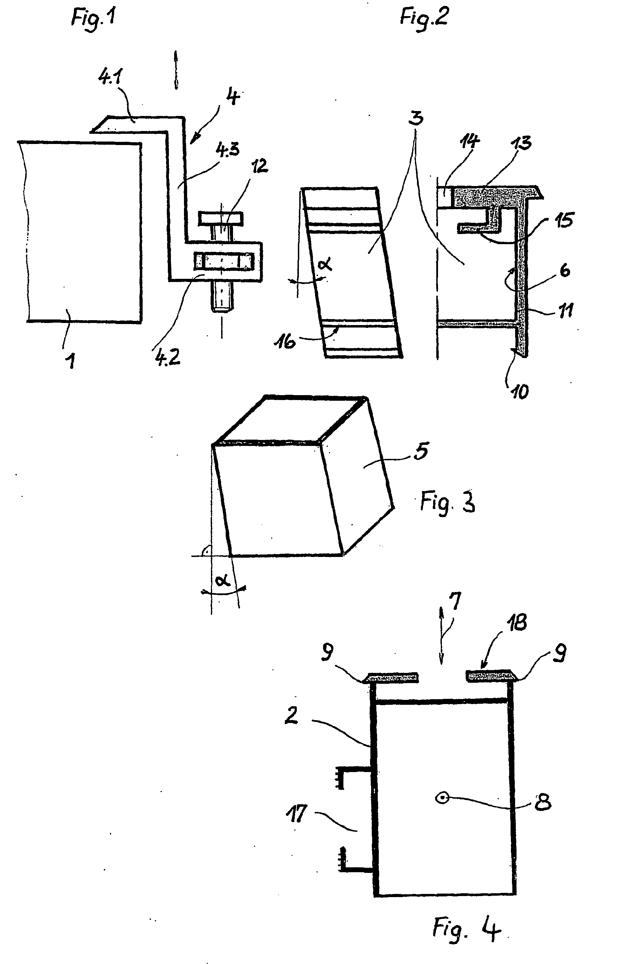

In den **Fig. 1-4** ist die Befestigung für außenliegende Rahmenabschnitte 1 von Solarmodulen an einem Tragprofil 2 bestehend aus einem Klemmteilträger 3, der in Tragprofillängsrichtung 8 am Tragprofil 2 geführt verschiebbar ist und der mit dem Tragprofil 2 unter Einschluss eines Rahmenabschnittes 1 des Solarmoduls und eines im Klemmteilträger 3 geführten Klemmteils 4 verspannbar ist, in den Einzelteilen dargestellt.

**Fig. 1** zeigt die Positionierung des Klemmteils 4 am Rahmenabschnitt 1 des Solarmoduls. Das Klemmteil 4 ist als Doppelwinkelprofil mit in entgegengesetzte Richtung weisenden Schenkeln 4.1, 4.2 ausgebildet, wobei der oben liegende Schenkel 4.1 über den Rahmenabschnitt 1 des Solarmoduls greift und der untere Schenkel 4.2 geführt höhenverstellbar in Verschieberichtung 7 im und am Klemmteilträger 3 angeordnet ist. Zur Höhenverstellung des Klemmteils 4 in Verschieberichtung 7 ist ein Gewindebolzen 12 in einem Innengewinde des Schenkels 4.2 verdrehbar angeordnet und stützt sich am Kopfteil 13 des Klemmteilträgers 3 (Fig.2) ab. Das Innengewinde des Schenkels 4.2 wird durch eine in einem Hohlraum (Kanal) des Schenkels mit durchgehender Bohrung 4.2 angeordneten Mutter gebildet.

**Fig. 2** zeigt den Klemmteilträger 3, der in der Seitenansicht einen rhomboiden Querschnitt aufweist.

Im einzelnen besteht der Klemmteilträger 3 aus einem Kopfteil 13, zwei Seitenschenkeln 11 und einer Verbindung zwischen den Seitenschenkeln 11, die als Auflage 16 auf dem Tragprofil 2 dient. Die seitliche Führungspaarung 9, 10 des Klemmteilträgers 3 mit dem Tragprofil 2 besteht aus Längsstegen 9 des Tragprofils 2 (Fig.4) und Nasenstegen 10 an den Seitenschenkeln 11 des Klemmteilträgers 3.

Die beiden seitliche Führungspaarungen 9, 10 sowie die Auflage 16 gewährleisten nach dem Aufstecken oder Aufclicken des Klemmteilträgers 3 auf das Tragprofil 2 eine leichte und stabile Verschiebbarkeit in Tragprofillängsrichtung 8 und lassen eine hohe Spannkraft in Verschieberichtung 7 des Klemmteils 4 zu. Das Klemmteil 4 wird zum Verspannen in den Klemmteiltrager 3 eingesetzt und zwischen den Seitenschenkeln 11 geführt.

Wie in der Erläuterung zur Fig. 1 bereits erwähnt, dient zur Höhenverstellung des Klemmteils 4 in Verschieberichtung 7 ein Gewindebolzen 12, der in einem Innengewinde des Schenkels 4.2 verdrehbar angeordnet ist und sich am Kopfteil 13 des Klemmteilträgers 3 abstützt. Zum Abstützen ist das Kopfteil 13 innenseitig als gekröpfte Hohlschiene 15 zur Aufnahme des Kopfes des Gewindebolzens 12 ausgebildet. Ferner weist das Kopfteil 13 eine Bohrung 14 auf, über die der Kopf des Gewindebolzen 12 zugängig und mittels eines Schlüssels zum Verspannen verdrehbar ist.

Durch den rhomboiden Querschnitt des Klemmteilträgers 3 schließen die Stirnfläche des Rahmens 1 des Solarmoduls und die zur Stirnfläche des Rahmens 1 weisende Seitenebene des Klemmteilträgers 3 einen Winkel α ein. Das führt dazu, dass das zum Verspannen in den Klemmteilträger 3 eingesetzte Klemmteils 4 ebenfalls in einer geneigten Position zur Stirnfläche des Rahmens 1 steht. Das ist gewollt, denn beim Verspannen des nur seitlich durch die Seitenschenkel 11 geführten Klemmteils 4 (Führungsflächen 6) erfolgt nicht nur ein Verschieben in die Verschieberichtung 7 sondern bedingt durch das vorhandene notwendige Spiel auch in Richtung der Stirnfläche des Rahmens 1. Der Winkel α ist deshalb so bemessen, dass ein Verschieben des Klemmteils 4 innerhalb des Klemmteilträgers 3 beim Verspannen zu einer Endstellung des Steges 4.3 im wesentlichen parallel zur Stirnfläche des Rahmenteils 1 führt. Diese Verstell- und Fixiergeometrie wird noch vervollkommnet durch eine Muffe 5 (Fig.3).

**Fig. 3** zeigt eine Muffe 5, die innen und außen die Form eines schiefen Hohlquaders aufweist. Die Schiefwinkligkeit der Muffe 5 entspricht dem Winkel α. Durch diese Muffe 5 wird der Klemmteilträger 3 mit eingesetztem Klemmteil 4 im Bereich der Seitenschenkel 11 und des Steges 4.3 vor dem Verspannen umhüllt. Das Klemmteil 4 erhalt dadurch eine zusätzliche Führung und eine Begrenzung in Bezug auf die Verschiebung in Richtung Stirnfläche des Rahmens 1. In der verspannten Endstellung liegt der Steg 4.3 im Bereich gegenüber dem Schenkel 4.2 innen an der Muffe 5 an. Gleichzeitig verkleidet die Muffe 5 den Klemmteilträger 3 auf der sichtbaren Seite.

Für die Montage werden der Klemmteilträger 3, das Klemmteil 4 mit Gewindebolzen 12 und die Muffe 5 zu einer Montageeinheit zusammengesetzt. Diese Montageeinheiten lassen sich dann auch unter schwierigen Montagebedingungen wie z.B. auf einem Dach leicht auf das Tragprofil 2 aufschieben oder auch aufclicken (Herstellen der Führungspaarung 9, 10), mit dem Schenkel 4.1 über den Rahmenabschnitt 1 übergreifend anordnen und durch das Festdrehen des Gewindebolzens 12 fixieren.

**Fig. 4** zeigt ein bei der Befestigung genutztes Tragprofil 2. Dabei handelt es bevorzugt um ein stranggepresstes AL-Hohlprofil mit oben seitlich von der Auflagefläche 18 für den Rahmen 1 des Solarmoduls angeordneten Längsstegen 9, die parallel zur Tragprofillängsrichtung 8 verlaufen. Die Längsstege 9 des Tragprofils 2 bilden zusammen mit den Nasenstegen 10 der Seitenschenkeln 11 des Klemmteilträgers 3 jeweils eine seitliche Führungspaarung 9, 10 zwischen dem Klemmteilträgers 3 und dem Tragprofil 2. Weiterhin liegt die Auflage 16 des Klemmteilträgers 3 auf der Auflagefläche 18 des Tragprofils 2 auf.
Das Tragprofil 2 verfügt weiterhin über seitliche Anschlüsse 17 für die Dachbefestigung.

Neben den genannten hohen Festigkeitseigenschaften und der Montagefreundlichkeit zeichnen sich die eingesetzten Teile wie Tragprofil 2, Klemmteilträger 3, Klemmteil 4 und Muffe 5 dadurch aus, dass sie strangpressbare Al-Profile als Grundlage haben und ausschließlich durch Ablängen des jeweiligen Profils herstellbar sind. Das ist ein technologisch ausgesprochen kostengünstiges Herstellungsverfahren.

### Bezugszeichenliste

- 1: Rahmen des Solarmoduls
- 2: Tragprofil
- 3: Klemmteilträger
- 4: Klemmteil
- 4.1: Schenkel
- 4.2: Schenkel
- 4.3: Steg
- 5: Muffe
- 6: Führung des Klemmteilträgers
- 7: Verschieberichtung des Klemmteiles 4
- 8: Tragprofillängsrichtung
- 9: Längsstege
- 10: Nasen
- 11: Seitenschenkel
- 12: Gewindebolzen
- 13: Kopfteil
- 14: Bohrung im Kopfteil
- 15: gekröpft ausgebildete Hohlschiene
- 16: Auflage
- 17: Anschluss für Dachbefestigung
- 18: Auflagefläche

## Patentansprüche

1. Befestigungseinrichtung für außenliegende Rahmen (1) von Solarmodulen an einem Tragprofil (2) bei dem zwischen einem in Tragprofillängsrichtung (8) außen gegenüber dem Tragprofil (2) geführt verschiebbaren Klemmteil (4) und dem Tragprofil (2) unter Einschluss eines Rahmenabschnittes (1) des Solarmoduls eine Spannverbindung herstellbar ist, wobei das Klemmteil (4) als Doppelwinkelprofil mit einem Steg (4.3) und in entgegengesetzte Richtung weisenden Schenkeln (4.1, 4.2) ausgebildet ist, wobei der oben liegende Schenkel (4.1) über den Rahmenabschnitt (1) des Solarmoduls greift und der untere Schenkel (4.2) höhenverstellbar in Verschieberichtung (7) angeordnet ist, **dadurch gekennzeichnet, dass**
die Befestigungseinrichtung einen Klemmteilträger (3) umfasst, und
dass das Klemmteil (4) mit seinem Schenkel (4.2) in dem Klemmteilträger (3) geführt angeordnet ist, und dass zur Höhenverstellung des Klemmteils (4) in Verschieberichtung (7) entweder ein Gewindebolzen (12) in einem Innengewinde des Schenkels (4.2) verdrehbar angeordnet ist und sich am Kopfteil (13) des Klemmteilträgers (3) abstützt oder ein Gewindebolzen (12) in einem Innengewinde des Kopfteils (13) verdrehbar angeordnet ist und sich am Schenkel (4.2) abstützt, und dass der Klemmteilträger (3) in Tragprofillängsrichtung in einer Führungspaarung mit dem Tragprofil (2) verschiebbar ist.

2. Befestigungseinrichtung nach Anspruch 1, **dadurch gekennzeichnet, dass**
die Führungspaarung des Klemmteilträgers (3) mit dem Tragprofil (2) aus Längsstegen (9) des Tragprofils (2) und Nasen oder Nasenstegen (10) an Seitenschenkeln (11) des Klemmteilträgers (3) besteht sowie eine Auflage (16,18) des Klemmteilträgers (3) auf dem Tragprofil (2) vorhanden ist.

3. Befestigungseinrichtung nach Anspruch 2, **dadurch gekennzeichnet, dass**
die Längsstege (9) und die Nasen oder Nasenstege (10) parallel zur Tragprofillängsrichtung (8) verlaufen.

4. Befestigungseinrichtung nach einem der Ansprüche 1 bis 3, **dadurch gekennzeichnet, dass**
die zur Stirnfläche des Rahmens (1) des Solarmoduls weisende Seitenebene des Klemmteilträgers (3) einen Winkel α gegenüber der Stirnfläche des Rahmens (1) einnimmt.

5. Befestigungseinrichtung nach Anspruch 4, **dadurch gekennzeichnet, dass**
der Klemmteilträger (3) in der Seitenansicht einen rhomboiden Querschnitt aufweist.

6. Befestigungseinrichtung nach einem der Ansprüche 1 bis 5, **dadurch gekennzeichnet, dass**
das Kopfteil (13) eine Bohrung (14) aufweist, über die der Gewindebolzen (12) zugängig ist.

7. Befestigungseinrichtung nach einem der Ansprüche 1 bis 6, **dadurch gekennzeichnet, dass**
das Kopfteil (13) innenseitig als gekröpfte Hohlschiene (15) zur Aufnahme eines Kopfes des Gewindebolzens (12) ausgebildet ist.

8. Befestigungseinrichtung nach einem der Ansprüche 1 bis 7, **dadurch gekennzeichnet, dass**
das Innengewinde des Schenkels (4.2) oder des Kopfteiles (13) durch eine in einem Hohlraum oder einer Nut des Schenkels (4.2) oder des Kopfteils (13) angeordnete Mutter gebildet ist.

9. Befestigungseinrichtung nach einem der Ansprüche 1 bis 8, **dadurch gekennzeichnet, dass**
der Klemmteilträger (3) mit eingesetztem Klemmteil (4) im Bereich der Seitenschenkel (11) und des Steges (4.3) durch eine Muffe (5) umhüllt ist.

10. Befestigungseinrichtung nach Anspruch 9, **dadurch gekennzeichnet, dass**
die Muffe (5) innen und vorzugsweise auch außen die Form eines schiefen Hohlquaders aufweist.

11. Befestigungseinrichtung nach Anspruch 10, **dadurch gekennzeichnet, dass**
die Schiefwinkligkeit der Muffe (5) dem Winkel α entspricht.

12. Befestigungseinrichtung nach einem der Ansprüche 1 bis 11, **dadurch gekennzeichnet, dass**
der Winkel α so bemessen ist, dass ein Verschieben des Klemmteils (4) innerhalb des Klemmteilträgers (3) beim Verspannen zu einer Endstellung des Steges (4.3) parallel zur Stirnfläche des Rahmenteils (1) führt.

13. Befestigungseinrichtung nach einem der Ansprüche 10 bis 12, **dadurch gekennzeichnet, dass**
in der verspannten Endstellung der Steg (4.3) im Bereich gegenüber dem Schenkel (4.2) innen an der Muffe (5) anliegt.

## Claims

1. Fixing device for external frames (1) of solar modules on a profiled support (2), in which a clamping connection can be established between a clamping piece (4) displaceable in a guided manner on the outside relative to the profiled support (2) in the longitudinal direction (8) of the profiled support and the profiled support (2) with the inclusion of a frame section (1) of the solar module, wherein the clamping piece (4) is designed as a double-angled profiled element with a web (4.3) and with legs (4.1, 4.2) that extend in opposite directions, wherein the upper leg (4.1) embraces the frame section (1) of the solar module and the lower leg (4.2) is arranged vertically adjustably in the direction of displacement (7), **characterized in that**
the fixing device comprises a clamping-piece support (3), and that the leg (4.2) of the clamping piece (4) is arranged in a guided manner in the clamping-piece support (3), and that, for vertically adjusting the clamping piece (4) in the direction of displacement (7), either a threaded bolt (12) is rotatably arranged in an internal thread of the leg (4.2) and is supported on the head part (13) of the clamping-piece support (3) or a threaded bolt (12) is rotatably arranged in an internal thread of the head part (13) and is supported on the leg (4.2), and that the clamping-piece support (3) is displaceable in the longitudinal direction of the profiled support in a guiding pair with the profiled support (2).

2. Fixing device according to Claim 1, **characterized in that**
the guiding pair of the clamping-piece support (3) with the profiled support (2) consists of longitudinal webs (9) of the profiled support (2) and noses or nose webs (10) on side legs (11) of the clamping-piece support (3), and that there is a rest (16, 18) of the clamping-piece support (3) on the profiled support (2).

3. Fixing device according to Claim 2, **characterized in that**
the longitudinal webs (9) and the noses or nose webs (10) extend parallel to the longitudinal direction (8) of the profiled support.

4. Fixing device according to any one of Claims 1 to 3, **characterized in that** the lateral plane of the clamping-piece support (3) directed towards the face of the frame (1) of the solar module is arranged at an angle α with respect to the face of the frame (1).

5. Fixing device according to Claim 4, **characterized in that**
the clamping-piece support (3) has a rhomboidal cross-section in the side view.

6. Fixing device according to any one of Claims 1 to 5, **characterized in that** the head part (13) has a bore (14) via which the threaded bolt (12) is accessible.

7. Fixing device according to any one of Claims 1 to 6, **characterized in that** the inside of the head part (13) is designed as a cranked hollow rail (15) for receiving a head of the threaded bolt (12).

8. Fixing device according to any one of Claims 1 to 7, **characterized in that** the internal thread of the leg (4.2) or of the head part (13) is formed by a nut arranged in a cavity or in a groove of the leg (4.2) or of the head part (13).

9. Fixing device according to any one of Claims 1 to 8, **characterized in that** the clamping-piece support (3) with the inserted clamping piece (4) is covered by a sleeve (5) in the region of the side legs (11) and of the web (4.3).

10. Fixing device according to Claim 9, **characterized in that**
the sleeve (5) has the internal shape, and preferably also the external shape, of an oblique hollow rectangular parallelepiped.

11. Fixing device according to Claim 10, **characterized in that** the oblique angle of the sleeve (5) corresponds to angle α.

12. Fixing device according to any one of Claims 1 to 11, **characterized in that** angle α is dimensioned such that a displacement of the clamping piece (4) within the clamping-piece support (3) during clamping results in an end position of the web (4.3) that is parallel to the face of the frame part (1).

13. Fixing device according to any one of Claims 10 to 12, **characterized in that** in the clamped end position, the web (4.3) rests on the inside of the sleeve (5) in the region opposite the leg (4.2).

## Revendications

1. Equipement de fixation pour des cadres (1), situés à l'extérieur, de modules solaires sur un profilé porteur (2), dans lequel un assemblage par serrage est réalisable entre une partie de serrage (4) pouvant être déplacée de façon guidée dans la direction longitudinale de profilé porteur à l'extérieur par rapport au profilé porteur (2) et le profilé porteur (2), avec inclusion d'un tronçon de cadre (1) du module solaire, la partie de serrage (4) étant constituée en tant que profil coudé double avec une nervure (4.3) et des branches (4.1, 4.2) orientées dans la direction opposée, la branche (4.1) située en haut empiétant sur le tronçon de cadre (1) et la branche (4.2) inférieure étant disposée de façon réglable en hauteur dans la direction de déplacement (7), **caractérisé en ce que**
l'équipement de fixation comprend un support de partie de serrage (3), et **en ce que** la partie de serrage (4) avec sa branche (4.2) est disposée de façon guidée dans le support de partie de serrage (3), et **en ce que**, pour le réglage en hauteur de la partie de serrage (4) dans la direction de déplacement (7), un boulon fileté (12) est disposé de façon rotative dans un filetage intérieur de la branche (4.2) et s'appuie sur la partie de tête (13) du support de partie de serrage (3), ou **en ce qu'**un boulon fileté (12) est disposé de façon rotative dans un filetage intérieur de la partie de tête (13) et s'appuie sur la branche (4.2), et **en ce que** le support de partie de serrage (3) peut être déplacé dans la direction longitudinale du profilé porteur dans un appariement de guidage avec le profilé porteur (2).

2. Equipement de fixation selon la revendication 1, **caractérisé en ce que**
l'appariement de guidage du support de partie de serrage (3) avec le profilé porteur (2) se compose de nervures longitudinales (9) du profilé porteur (2) et de becs ou de nervures de bec (10) sur des branches latérales (11) du support de partie de serrage (3), et **en ce qu'**un appui (16, 18) du support de partie de serrage (3) est présent sur le profilé porteur (2).

3. Equipement de fixation selon la revendication 2, **caractérisé en ce que**
les nervures longitudinales (9) et les becs ou nervures de bec (10) sont parallèles à la direction longitudinale du profil porteur.

4. Equipement de fixation selon une des revendications 1 à 3, **caractérisé en ce que**
le plan latéral du support de partie de serrage (3) dirigé vers la face frontale du cadre (1) du module solaire adopte un angle α par rapport à la face frontale du cadre (1).

5. Equipement de fixation selon la revendication 4, **caractérisé en ce que**
le support de partie de serrage (3) présente, en vue de côté, une section rhomboïdale.

6. Equipement de fixation selon une des revendications 1 à 5, **caractérisé en ce que**
la partie de tête (13) présente un alésage (14) par le biais duquel le boulon fileté (12) est accessible.

7. Equipement de fixation selon une des revendications 1 à 6, **caractérisé en ce que**
la partie de tête (13) est, côté intérieure, constituée en tant que rail creux (15) contrecoudé pour loger une tête du boulon fileté (12).

8. Equipement de fixation selon une des revendications 1 à 7, **caractérisé en ce que**
le filet intérieur de la branche (4.2) ou de la partie de tête (13) est formé par un écrou disposé dans une cavité ou dans une rainure de la branche (4.2) ou de la partie de tête (13).

9. Equipement de fixation selon une des revendications 1 à 8, **caractérisé en ce que**
le support de partie de serrage (3) avec la partie de serrage (4) introduite est, dans la zone des branches latérales (11) et de la nervure (4.3), enveloppé d'un manchon (5).

10. Equipement de fixation selon la revendication 9, **caractérisé en ce que**
le manchon (5) présente, à l'intérieur et de préférence également à l'extérieur, la forme d'un parallélépipède creux oblique.

11. Equipement de fixation selon la revendication 10, **caractérisé en ce que**
l'obliquité du manchon (5) correspond à l'angle α.

12. Equipement de fixation selon une des revendications 1 à 11, **caractérisé en ce que**
l'angle α est dimensionné de sorte qu'un déplacement de la partie de serrage (4) à l'intérieur du support de partie de serrage (3) lors du serrage conduit à une position extrême de la nervure (4.3) parallèlement à la face frontale de la partie de cadre (1).

13. Equipement de fixation selon une des revendications 10 à 12, **caractérisé en ce que**,
dans la position extrême serrée, la nervure (4.3) dans la zone en face de la branche (4.2) appuie intérieurement contre le manchon (5).
